Europäisches Patentamt

(19) European Patent Office

Office européen des brevets

(11) **EP 0 759 803 B1**

(12) **FASCICULE DE BREVET EUROPEEN**

(45) Date de publication et mention
de la délivrance du brevet:
**01.07.1998 Bulletin 1998/27**

(21) Numéro de dépôt: **95920954.5**

(22) Date de dépôt: **18.05.1995**

(51) Int. Cl.$^6$: **B01D 53/32**, C01B 13/02,
C25B 1/02

(86) Numéro de dépôt international:
**PCT/FR95/00651**

(87) Numéro de publication internationale:
**WO 95/32050 (30.11.1995 Gazette 1995/51)**

(54) **STRUCTURE COMPOSITE COMPORTANT UN ELECTROLYTE SOLIDE ET AU MOINS UNE ELECTRODE VOLUMIQUE**

VERBUNDSTRUKTUR AUS EINEM FESTELEKTROLYT UND MINDESTENS EINER VOLUMENELEKTRODE

COMPOSITE STRUCTURE INCLUDING A SOLID ELECTROLYTE AND AT LEAST ONE VOLUME ELECTRODE

(84) Etats contractants désignés:
**CH DE FR GB IT LI NL**

(30) Priorité: **19.05.1994 FR 9406138**

(43) Date de publication de la demande:
**05.03.1997 Bulletin 1997/10**

(73) Titulaires:
- **L'AIR LIQUIDE, SOCIETE ANONYME POUR L'ETUDE ET L'EXPLOITATION DES PROCEDES GEORGES CLAUDE
75321 Paris Cédex 07 (FR)**
- **UNIVERSITE DES SCIENCES ET TECHNOLOGIES DE LILLE
59655 Villeneuve d'Ascq (FR)**
- **ECOLE NATIONALE SUPERIEURE DE CHIMIE DE LILLE
F-59655 Villeneuve D'Ascq (FR)**

(72) Inventeurs:
- **KLEITZ, Michel
F-38000 Grenoble (FR)**
- **MAIRESSE, Gaétan
F-59655 Villeneuve-d'Ascq (FR)**
- **BOIVIN, Jean-Claude
F-59655 Villeneuve-d'Ascq (FR)**
- **LAGRANGE, Gilles
F-91470 Forges-les-Bains (FR)**

(74) Mandataire: **Le Moenner, Gabriel
L'AIR LIQUIDE
75, Quai d'Orsay
75321 Paris Cédex 07 (FR)**

(56) Documents cités:
EP-A- 0 399 833          WO-A-93/16966
WO-A-94/06544            WO-A-94/06545
FR-A- 2 698 016

## Description

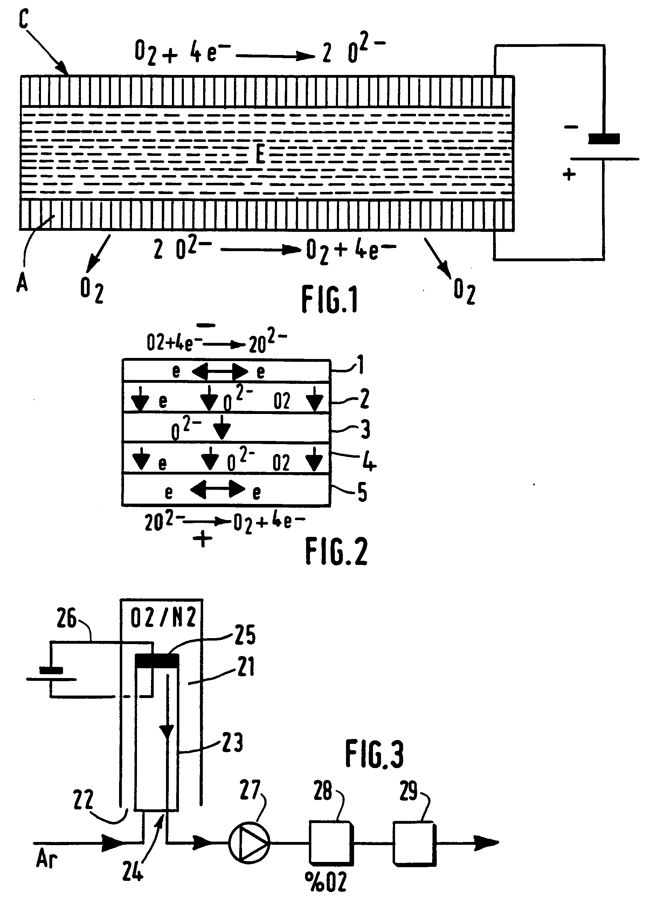

Dans le domaine de la séparation de l'oxygène de l'air ou d'un mélange de gaz le contenant, par emploi d'une cellule électrochimique à électrolyte solide, divers couples électrolyte-électrode peuvent être utilisés. Le principe de fonctionnement d'une cellule élémentaire est illustré par la figure 1.

Les molécules d'oxygène de l'air sont réduites à la cathode (C) en ions $O^{2-}$, lesquels sont ensuite transportés à travers l'électrolyte solide (E) imperméable aux gaz (zircone stabilisée citée à titre d'exemple sur la figure 1) sous l'effet d'un champ électrique; sur l'autre face de la cellule, ces ions sont oxydés à l'anode (A) pour générer les molécules d'oxygène. Les performances de la cellule dépendent donc de la conductivité ionique de l'électrolyte et de la capacité des matériaux d'électrodes à réduire l'oxygène ou oxyder les ions $O^{2-}$ à la température de travail.

La majorité des électrolytes solides utilisés pour la séparation de l'oxygène de l'air sont des zircones stabilisées (par exemple à l'yttrium). Ces composés permettent de travailler entre 700 et 800°C (CERAMATEC INC., US 4.879.016).

Une nouvelle classe d'oxydes dérivés de $Bi_4V_2O_{11}$ dans lesquels une partie variable du vanadium est remplacée par un élément, par exemple un métal alcalino-terreux, un métal de transition, une terre rare ou un élément des groupes III à V, a été décrite dans la demande internationale de brevet PCT WO91/01274. Ces oxydes sont des conducteurs d'ions $O^{2-}$ et leur conductivité anionique à 300°C est du même ordre de grandeur que celle de la zircone stabilisée à 600°C. Ces électrolytes solides peuvent être mis en oeuvre avec différents couples d'électrodes. Les électrodes citées dans la littérature (Diplôme Supérieur de Recherche de T. IHARADA de l'Université de Grenoble - sept. 1991) sont soit l'or, soit le platine ou le LSM (manganite de lanthane dopée au strontium).

Ces dérivés sont souvent désignés par le nom générique BIMEVOX (Université des Sciences et Technologies de Lille).

Le document WO-A-9 406 545 décrit des structures composites comprenant un électrolyte solide conducteur d'anions à base de composés BIMEVOX en contact avec des conducteurs électroniques.

Les dérivés BIMEVOX répondent plus généralement à la formule (I) :

$$(Bi_{2-x} M_x O_2) (V_{1-y} M'_y O_z) \qquad (I)$$

dans laquelle :

- M représente un ou plusieurs éléments de substitution de Bi, choisi(s) parmi ceux ayant un nombre d'oxydation inférieur ou égal à 3,
- M' représente un ou plusieurs éléments de substitution de V, choisi(s) parmi ceux ayant un nombre d'oxydation inférieur, égal ou supérieur à 5,

les valeurs limites supérieures de x, y et donc de z étant fonction de la nature des éléments substituants M et M', étant entendu que l'un au moins des indices x et y n'est pas nul.

En particulier, les dérivés BIMEVOX peuvent aussi répondre à la formule (II) :

$$(Bi_2O_2) (V_{1-y} M'_y O_z) \qquad (II)$$

dans laquelle :

- M' est tel que défini ci-dessus, y étant non nul ;
    ou encore à la formule (III) :

$$(Bi_{2-x} M_x O_2) (VO_z) \qquad (III)$$

dans laquelle :
- M est tel que défini ci-dessus, x étant non nul.

M', lorsqu'il est présent, est avantageusement sélectionné parmi les métaux alcalins, alcalino- terreux, les métaux de transition, ou encore les éléments des groupes III à V de la classification périodique ou parmi les terres rares.

Mais si des électrolytes à base de BIMEVOX permettent le transfert d'ions $O^{2-}$ à travers leur épaisseur à basse température (300°C), les électrodes métalliques qui leur sont couramment associées (Au, Pt) sont des électrodes à bas flux qui ne permettent pas une dissociation catalytique correcte des molécules d'oxygène amenées à leur contact. Par ailleurs, la structure même de ce type d'électrodes réduit considérablement la surface développée de l'interface électrode-électrolyte. Il a en outre pu être constaté que ces inconvénients peuvent aussi se rencontrer lorsque ces électrodes sont mises en oeuvre avec des électrolytes classiques, autres que ceux à base de BIMEVOX. Ces électrolytes solides sont par exemple la zircone stabilisée par un agent dopant comme l'yttrium, ou le calcium, ou des oxydes de bismuth $Bi_2O_3$ dopés ou non par des éléments tels le magnésium, le calcium, l'yttrium ou l'erbium.

L'invention a pour but de remédier à ces difficultés, notamment par la mise au point de nouveaux systèmes électrode-électrolyte mettant en oeuvre des électrodes adaptées notamment aux BIMEVOX, ayant à la fois des propriétés catalytiques de dissociation de $O_2$, des propriétés de conduction électronique et une surface développée autorisant des transports d'oxygène à hauts flux d'un côté à l'autre de ces systèmes, notamment à des températures de 300 à 700°C.

Pour la constitution des susdits systèmes, il est proposé, conformément à l'invention, une structure composite comportant un électrolyte solide conducteur d'anions $O^{2-}$, essentiellement imperméable aux gaz, ledit électrolyte étant en contact avec deux électrodes, respectivement une cathode et une anode poreuses aux gaz, l'une au moins de la cathode et de l'anode étant une électrode volumique à base (i) d'au moins un composé de type BIMEVOX et (ii) d'un conducteur électronique formant une phase solide distincte, dispersé dans le précédent composé de façon à définir au sein même des volumes respectifs de cette électrode volumique, une pluralité de points triples de contact entre une atmosphère gazeuse ambiante, l'électrolyte et le conducteur électronique.

Au sens de la présente invention, on entend par BIMEVOX un dérivé de l'oxyde mixte $Bi_4V_2O_{11}$, dont l'un au moins des éléments constitutifs autres que l'oxygène est partiellement substitué par au moins un élément substituant tel qu'à la fois le type structural de la phase gamma de $Bi_4V_2O_{11}$ et l'équilibre des charges soient maintenus. Ces composés et leur procédé de préparation sont définis dans la demande internationale WO 91/01274 mentionnés plus haut et dont référence est intégrée dans la présente description.

De manière avantageuse, l'électrolyte solide est lui-même à base d'un composé du type BIMEVOX tel que défini ci-dessus.

Cet électrolyte solide peut aussi être constitué d'une zircone stabilisée par un agent dopant comme l'yttrium ou le calcium, ou des oxydes de bismuth $Bi_2O_3$ dopés ou non par des éléments tels le magnésium, le calcium, l'yttrium ou l'erbium.

Une électrode volumique selon l'invention est telle qu'elle permet une conduction mixte ionique et électronique.

Dans l'électrode volumique, les constituants sont au moins au nombre de deux, c'est-à-dire au moins un BIMEVOX et un métal ou oxyde métallique à titre de conducteur électronique. Ces constituants sont co-frittés en vue de l'obtention de l'électrode. Les granulométries respectives de ces constituants ainsi que le temps et la température de frittage sont déterminés de façon que la structure des couches composites soit suffisamment poreuse pour autoriser la diffusion de l'oxygène dans leurs volumes respectifs.

Avantageusement, une structure composite selon l'invention comprend deux électrodes volumiques, respectivement une anode et une cathode, chacune à base d'au moins un composé de type BIMEVOX et d'un conducteur électronique tels que définis ci-dessus.

Il va de soi que l'indication des constituants essentiels des structures composites de l'invention n'est pas exclusive de la présence d'autres constituants dès lors que ceux-ci n'interféreraient pas de façon notable avec les propriétés requises de ces structures composites (conductibilités ioniques et électroniques, porosité, etc...).

Ces structures composites sont avantageusement applicables à la constitution de cellules électrochimiques pour la séparation ou l'extraction d'oxygène hors d'un gaz le contenant et amené aux surfaces cathodiques, et à la récupération de cet oxygène aux côtés anodiques de cette structure, lorsqu'elles sont elles-mêmes intercalées dans un circuit d'alimentation en courant électrique permettant la création d'une différence de potentiel entre leurs faces opposées, le cas échéant par l'intermédiaire de collecteurs de courant en contact électrique avec les électrodes desdites structures composites. Lorsque la tension induite entre les électrodes opposées de la structure composite selon l'invention est suffisante pour permettre la réduction de l'oxygène admis du côté cathodique en ions $O^{2-}$ et l'oxydation des ions $O^{2-}$ transférés à travers l'électrolyte, les molécules d'oxygène extraites peuvent être récupérées du côté anodique de la structure.

Le mécanisme de réduction de l'oxygène peut être illustré par l'équation :

$$1/2\ O2(gaz) + Vo + 2e \Leftrightarrow O^{2-}.$$

Cette représentation a l'avantage de montrer le rôle des "points triples", c'est-à-dire des sites simultanément au contact de l'oxygène, de l'électrolyte (Vo) et du conducteur électronique (2e).

La chaîne électrochimique peut donc être notamment représentée suivant le schéma :
CC / BiMEVOX'-CE' / électrolyte / BiMEVOX"-CE" / CC
où

- l'électrolyte, solide et imperméable aux gaz, est avantageusement un BIMEVOX dont le dopant Me peut être d'une manière non limitative au moins l'un des éléments Ti, Co, Ni, Cu, Nb, Mn, Zn, etc... ;
- CC représente les collecteurs de courant qui assurent à la fois l'apport des électrons à la surface de la cathode et leur évacuation à l'anode. Ces collecteurs, par exemple de l'or, doivent naturellement être compatibles avec les BIMEVOX. Ces collecteurs de courants peuvent être omis quand BIMEVOX -CE' et BIMEVOX-CE" ont une conductivité électronique de surface suffisante.
- BiMEVOX'-CE' et BIMEVOX"-CE" représentent les deux constituants caractéristiques des électrodes, en des proportions variables, c'est-à-dire d'une part un BiMEVOX et, d'autre part, un conducteur électronique "CE", notamment un métal ou un oxyde métallique. Ce métal ou le métal de l'oxyde métallique pouvant être identique ou différents des métaux des BIMEVOX.

Par ailleurs, les BIMEVOX de BIMEVOX'-CE', BIMEVOX"-CE" et, le cas échéant, celui de l'électrolyte, peuvent être identiques ou différents.

L'homme du métier appréciera immédiatement les conditions auxquelles doit satisfaire le conducteur électronique ajouté à chaque BIMEVOX des électrodes volumiques, à savoir outre sa conduction électronique :

(1) sa capacité à former des points triples avec le ou les différents BIMEVOX environnant(s) et l'atmosphère extérieure, notamment l'air ;

(2) sa compatibilité, en d'autres termes une absence de réactivité chimique avec le ou les différents BIMEVOX entrant dans les structures composites de l'invention.

Les conditions physiques auxquelles devront répondre les structures composites selon l'invention seront dans chaque cas déterminées par l'homme du métier.

D'une façon générale il y aura toujours avantage à mettre en oeuvre des électrolytes en épaisseur aussi réduite que possible, ne serait-ce que pour réduire les tensions internes.

En ce qui concerne les électrodes volumiques, leur épaisseur dépendra du nombre de "points triples" formés. Cette épaisseur peut souvent en fait être très réduite comme il résultera des essais indiqués plus loin.

Comme cela a déjà été indiqué plus haut, les BIMEVOX respectivement mis en oeuvre dans l'électrolyte solide et les électrodes volumiques peuvent être identiques ou différents. Dans le cas où ils sont identiques, il peut même exister une certaine continuité entre les phases, notamment lorsque l'électrode volumique peut être produite par diffusion limitée dans des parties de l'épaisseur de la strate centrale, comme cela paraît être le cas lorsque l'on réalise des dépôts d'oxyde $RuO_2$ sur les surfaces d'un électrolyte à base d'un BIMEVOX donné.

Enfin en ce qui concerne les proportions dans les électrodes volumiques du BIMEVOX, d'une part, du conducteur électronique, d'autre part, on appréciera qu'elles seront à chaque cas déterminées en fonction des besoins techniques. L'un des paramètres essentiels à prendre en considération réside naturellement dans la production d'un nombre de points triples suffisants, ainsi que dans l'établissement d'une conductivité ionique et électronique maximale (sans pour autant nuire à d'autres paramètres, notamment porosité, conductivité, etc...). On indique de façon strictement non limitative que les proportions pondérales varient, par exemple, de 20 à 80 % de l'un des constituants et de 80 à 20 % de l'autre (si l'on fait abstraction d'autres composés chimiques éventuellement également présents dans les électrodes volumiques).

De même, c'est également de la désirabilité d'obtenir un nombre maximum de points triples que dépendront les granulométries respectives des deux constituants, notamment de 0,1 à 50 µ en moyenne pour le BIMEVOX et de 0,01 à 50 µ pour le conducteur électronique.

On indique ci-après, à titre d'exemple, les conditions générales dans lesquelles des structures composites conformes à l'invention peuvent être préparées au laboratoire.

(1) Préparation de l'électrolyte solide

Les matériaux BIMEVOX sont obtenus par synthèse directe à l'état solide à partir de Bi2O3, V2O5 et l'oxyde du métal de substitution mélangés dans les proportions stoechiométriques. Cette synthèse est définie dans la demande internationale WO 91/01274.

(2) Formation des électrodes volumiques

Le matériau d'électrolyte (le même que celui de l'électrolyte proprement dit ou un autre) et les particules métalliques sont préalablement broyés et mélangés à une composition apte à former des laques, par exemple l'une de celles commercialisées par la Société Degussa, avant d'être appliqués sur l'électrolyte. La préparation se fait en trois étapes :

- 15 minutes à 120°C pour éliminer le solvant
- 1 heure à 350°C pour éliminer les liants
- 5 heures entre 700°C et 770°C afin de fritter le matériau constitutif de l'électrode volumique.

Un précollecteur de courant, par exemple à base d'or, peut être déposé sur ledit matériau également à partir d'une composition apte à former une laque.

Le dépôt des électrodes sur l'électrolyte est donc relativement facile, beaucoup plus que pour la production "d'électrodes simples" à base d'or poreux, lesquelles doivent alors présenter une certaine épaisseur pour assurer une bonne conduction électronique de surface tout en conservant une certaine porosité pour obtenir un nombre de "points triples" suffisants. En utilisant une électrode volumique, le nombre de points triples est beaucoup plus important, ce qui rend aussi moins critique la phase de déposition. La reproductibilité des essais est alors bien meilleure.

D'une façon générale les observations suivantes peuvent être faites quant aux avantages fournis par l'utilisation de structures composites selon l'invention dans des cellules électrochimiques du type mentionné plus haut, par comparaison avec des structures mettant en oeuvre des "électrodes" à base seulement d'or poreux déposé sur les deux faces d'un disque à base d'un BIMEVOX dont l'élément substituant est le cobalt (BICOVOX), ; ces structures de comparaison étant identifiées plus loin dans les figures et les légendes qui s'y rapportent par l'abréviation "Au" :

- abaissement possible des tensions appliquées et augmentation de la durée de vie des cellules ;
- densités de courant limite accrues supportées par la cellule ;
- longévité des cellules.

Des caractéristiques supplémentaires de l'invention apparaîtront encore au cours de la description qui suit, d'exemples de réalisation de l'invention, notamment par référence aux dessins dans lesquels :

- la figure 1 représente la structure de principe d'une cellule élémentaire, telle qu'elle était déjà envisagée auparavant, pour réaliser une séparation électrochimique de l'oxygène contenu dans de l'air ou un autre mélange de gaz ;
- la figure 2 fournit un schéma de principe d'une cellule à base d'électrolyte et d'électrode solides conforme à l'invention ;
- la figure 3 est un schéma d'une cellule d'étude mettant en oeuvre l'invention, ainsi que des éléments annexés qui ont été mis en oeuvre pour effectuer les mesures dont les résultats sont rapportés plus loin ;
- les figures 4 et 5 fournissent des courbes quant aux capacités comparées de cellules conformes à l'invention, d'une part, et de cellules en comparaison, d'autre part, à transférer de l'oxygène en fonction du temps (figure 4), et en fonction de densités de courant appliquées aux dites cellules (figure 5).

Exemple 1 :

La cellule de l'exemple 1 qui suit a été produite essentiellement à des fins de comparaison. Elle peut être schématisée par la chaîne électrochimique suivante :

      Au(CC)/BICOVOX/Au(CC)

ou encore sous forme plus abrégée : "Au" dans les dessins.

Les exemples 2 et 3 concernent plus particulièrement deux modes de réalisation distincts de l'invention :

Exemple 2 :

Au(CC)/BICOVOX-RuO$_2$/BICOVOX/BICOVOX-RuO$_2$/Au(CC) ou encore sous forme plus abrégée dans les dessins : "RuO$_2$-BiCo" ; et

Exemple 3 :

      Au(CC)/BICOVOX-Au/BICOVOX/BICOVOX-Au/Au(CC)

1) Production des structures composites "Electrolyte-Electrodes".

Exemple 1) :

On élabore une installation pour la séparation électrochimique de l'oxygène de l'air de la façon suivante :

1. On prépare un électrolyte solide en forme de disque à partir d'une poudre d'une composition dérivée de Bi$_4$V$_2$O$_{11}$ de formule Bi$_2$V$_{0,9}$Co$_{0,1}$O$_{5,35}$ (BICOVOX). Pour ce faire, la poudre est broyée de sorte que le diamètre moyen des grains soit de 6 microns environ, la granulométrie variant de 0,3 à 15 microns. Le disque est obtenu par pressage en appliquant sur la poudre broyée une force de l'ordre de 1 tonne. Il présente une surface de 2 cm$^2$ et une épaisseur de 1,2 mm.

2. Le disque est alors fritté pendant 5 heures à 820°C dans une atmosphère d'air de façon à obtenir un produit résistant mécaniquement et imperméable aux gaz, présentant une compacité de l'ordre de 95%.

3. Sur une partie de chacune des surfaces du disque on dépose à l'aide d'un pinceau une couche d'une laque à base d'or.

On sèche le disque à 120°C afin d'éliminer les solvants, et à 350°C pour le départ des liants de la laque ; puis on fritte à 700°C pendant environ 1 minute dans une atmosphère d'air, pour former des dépôts d'électrodes.

Exemples 2 et 3 :

On répète le procédé de l'exemple 1, mais :

- dans l'exemple 2, on remplace la laque d'or par une laque contenant un mélange de BICOVOX( 40% en poids) et d'oxyde de ruthénium (60% en poids) les couches formées étant ensuite frittées à 750°C pendant 5 heures ;
- dans l'exemple 3, on remplace la laque d'or par une laque contenant un mélange BICOVOX (40% en poids) et d'or (60% en poids), les couches formées étant ensuite frittées à 750°C pendant 5 heures.

Le schéma de principe de la structure composite alors obtenue (par exemple celle de la figure 3) résulte par exemple de la figure 2 dans laquelle les chiffres de référence 1, 2, 3, 4 et 5 se rapportent respectivement :

- à un collecteur CC (Au) ;
- à une cathode BICOVOX/Au ;
- à un électrolyte BICOVOX ;
- à une anode BICOVOX/Au, et
- à un collecteur CC (Au).

2) Construction d'une cellule (montage expérimental) :

Ce montage comprend un premier compartiment 21 pourvu d'une admission d'air 22. A l'intérieur de ce compartiment est logé un tube en acier inoxydable 23 pourvu d'une sortie 24. Il est dans sa partie supérieure pourvu d'un disque 25 formé d'une structure composite conforme à l'invention. Afin de maintenir de manière stable le disque sur la tranche du tube en inox et d'assurer le contact électrique côté anodique, on applique un joint d'or (ou de ciment connu sous la marque "CERASTIL C3"). Le contact électrique côté cathodique est assuré par une tige métallique externe dont l'une des extrémités est au contact de l'or.

La structure composite 25 est elle-même intercalée dans un circuit électrique 26 permettant d'appliquer par l'intermédiaire de collecteurs appropriés une différence de potentiel entre les deux faces opposées du disque 25.

En fonctionnement pour la séparation électrochimique de l'oxygène de l'air, le côté cathodique du disque est mis en contact avec de l'air. L'oxygène pur est récupéré dans le tube en inox, du côté anodique de la cellule. Le tube en inox et la tige métallique sont reliés à un générateur électrique.

En d'autres termes, le disque 25 (électrolyte solide pourvu sur chacune de ses faces d'une électrode volumique) pourvoit à une séparation entre le premier compartiment dans lequel est admis l'air et le second compartiment à partir duquel on recueille un gaz enrichi en oxygène. Ce gaz extrait du tube 23 à l'aide d'une pompe 27 est analysé pour sa teneur en oxygène dans un analyseur 28.

Un bilan matière entre l'entrée et la sortie de l'installation permet de calculer la production d'oxygène :

$$QO2 = Qtot\,(\%O2_e - \%\,O_{2r}) / (100 - \%\,02r)$$

avec :

- QO2 et Qtot : débit d'O2 et débit total ;
- $\%\,O2_e$ et $\%\,O2_r$ : $\%\,O_2$ pour l'essai et dans le gaz à séparer et déterminés par l'analyse.

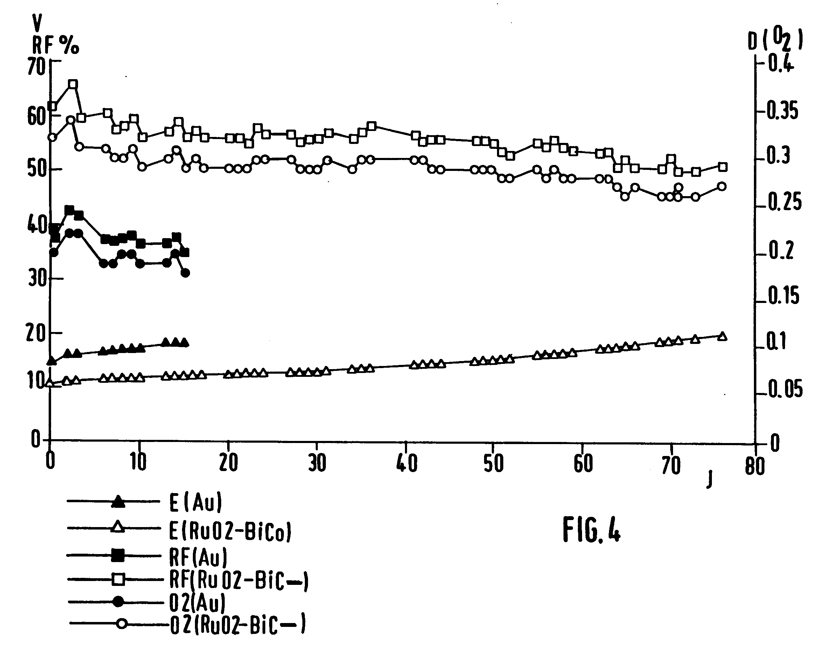

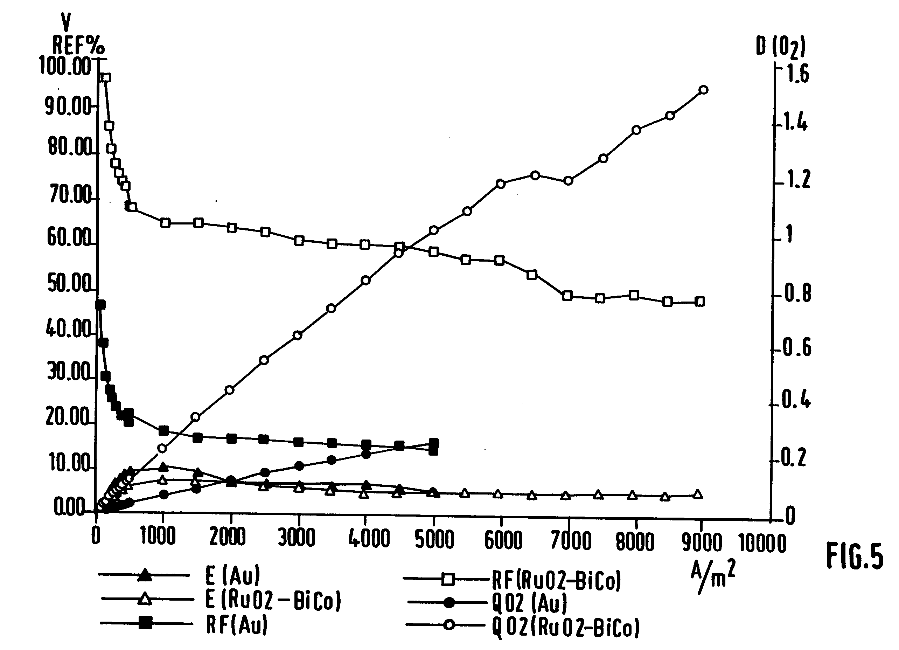

Les figures 4 et 5 illustrent les résultats comparatifs obtenus avec la structure composite de l'exemple 2 ($RuO_2$-BiCo), comparés aux résultats obtenus avec la structure de l'exemple 1 (Au) ;

Les courbes de la figure 4 sont représentatives des variations observées dans ces cellules, des tensions appliquées aux cellules, du rendement faradique RF% et des débits d'oxygène extraits électrochimiquement $D(O_2)$, mesurés en ml/mn/cm$^2$, en fonction du temps (en jours), lorsqu'elles travaillent sous une densité de courant de 1493 A/m$^2$ et à une température de 340°C.

Parallèlement les courbes de la figure 5 sont représentatives des variations en fonction de la densité de courant (A/m$^2$) appliquée, des tensions V, du rendement faradique RF % de la cellule, et des débits d'oxygène $D(O^2)$ dans des cellules travaillant aussi à une température de 340°C.

La signification des différentes courbes résulte des légendes simplifiées qui apparaissent sur les côtés droits des dessins.

Il apparaît à l'examen de ces courbes que, sous densité de courant constante, les cellules mettant en oeuvre la structure dite "Au" cessent de fonctionner au delà de 15 jours (destruction des électrodes ou des collecteurs) comme en témoignent les interruptions des courbes correspondantes (figure 4).

En revanche, les cellules fonctionnant avec la structure composite de l'exemple 2, ont fonctionné pendant près de 80 jours, et ce sous des tensions initialement plus faibles et ne se modifiant que peu dans le temps, et avec des rendements faradiques et des débits d'oxygène électrochimiquement transférés très supérieurs.

Il résulte de la figure 5 que les cellules de comparaison ont cessé de fonctionner, dès que la densité de courant dépassait 5000 A/m$^2$, alors que les cellules mettant en oeuvre les structures composites de l'invention fonctionnaient encore sous une densité de courant de 9000 A/m$^2$, et ce sous des tensions du même ordre de grandeur, mais avec également des rendements faradiques et des débits en oxygène électrochimiquement transférés beaucoup plus importants.

De la même façon, des essais réalisés avec la structure composite de l'exemple 3 ont permis de constater leur capacité à encore autoriser un transfert électrochimique d'oxygène dans les conditions qui ont été indiquées plus haut, sous une densité de courant de 9000 A/m$^2$ dans les mêmes conditions de température (340°C).

L'utilisation d'électrodes volumiques telles qu'elles sont définies dans la présente invention associées à un électrolyte de type BIMEVOX a permis d'accroître considérablement les performances de la structure composite (densité de courant, rendement faradique, et tension de cellule) tout en augmentant la durée de vie de cette même structure.

Il va de soi que dans des procédés industriels, d'autres techniques pourront être utilisées pour réaliser les dépôts d'électrodes volumiques sur les deux côtés de l'électrolyte :

- les surfaces externes des structures composites peuvent être développées (structure nid d'abeille...) sans problème supplémentaire essentiel quant à l'amenée de courant à la cellule ;
- les risques de dégradation de l'électrolyte sont très faibles (pas de densités de courant locales trop importantes et donc susceptibles de dégrader l'électrolyte).

Il résulte déjà de ce qui précède que l'invention trouvera des applications particulièrement intéressantes dans les applications (à basse température, notamment de 300 à 500°C) :

- à la production d'oxygène purifié par séparation de l'oxygène de l'air à partir des autres constituants de ce dernier ;
- à l'élimination de traces d'oxygène encore présentes dans un gaz que l'on veut débarrasser du premier constituant.

Les applications ne sont pas présentées à titre limitatif. Par exemple, cette même technologie peut également être adaptée dans le cas des capteurs et analyseurs d'oxygène aussi bien que des purificateurs de gaz (par exemple élimination de $O_2$ de l'argon obtenu par distillation cryogénique).

Dans chacun de ces cas de figures, les gaz à traiter seront amenés sur le versant cathodique des structures composites selon l'invention et l'oxygène, transféré électrochimiquement à travers la structure composite, sera récupéré ou évacué dans un compartiment distinct séparé du premier et englobant la face opposée de cette structure composite.

## Revendications

1. Structure composite comportant un électrolyte solide conducteur d'anions $O^{2-}$ essentiellement imperméable aux gaz, ledit électrolyte étant en contact avec deux électrodes, respectivement une cathode et une anode poreuses aux gaz, l'une au moins de la cathode et de l'anode étant une électrode volumique à base (i) d'au moins un composé de type BIMEVOX et (ii) d'un conducteur électronique formant une phase solide distincte, dispersé dans ledit composé de type BIMEVOX, de façon à définir au sein même des volumes respectifs de cette électrode volumique, une pluralité de points triples de contact entre une atmosphère gazeuse ambiante, l'électrolyte et le conducteur électronique.

2. Structure composite selon la revendication 1, caractérisée en ce que l'électrolyte solide est à base d'au moins un composé de type BIMEVOX.

3. Structure composite selon l'une des revendications 1 et 2, caractérisée en ce que les composés de type BIMEVOX respectivement contenus dans l'électrolyte solide et l'électrode volumique sont identiques.

4. Structure composite selon l'une quelconque des revendications 1 à 3, caractérisée en ce que le conducteur électronique dispersé dans l'électrode volumique est un métal ou un oxyde métallique.

5. Structure composite selon l'une quelconque des revendications 1 à 4, caractérisée en ce que le conducteur électronique dispersé dans l'électrode volumique est un oxyde de ruthénium $RuO_2$ ou de l'or.

6. Cellule électrochimique applicable notamment à la séparation ou à l'extraction hors d'un gaz du côté cathodique d'une structure composite selon l'une quelconque des revendications 1 à 5, de tout ou partie de l'oxygène qu'il pouvait contenir et à la récupération de cet oxygène du côté anodique de cette structure composite, elle-même intercalée dans un circuit d'alimentation en courant électrique permettant la création d'une différence de potentiel entre des côtés opposés de cette structure composite suffisante à permettre la réduction de l'oxygène admis du côté cathodique en ions $O^{2-}$ et l'oxydation des ions $O^{2-}$ transférés à travers la structure composite, en molécules d'oxygène gazeux sur son côté anodique.

7. Cellule électrochimique selon la revendication 6 caractérisée en ce que la structure composite est reliée au circuit d'alimentation par l'intermédiaire de collecteurs de courant au contact de l'une au moins de la cathode et de l'anode de ladite structure composite.

8. Pompe à oxygène mettant en oeuvre au moins une cellule électrochimique selon l'une des revendications 6 et 7, cette pompe comportant un compartiment d'alimentation en gaz contenant de l'oxygène pour son amenée au contact du côté cathodique de la structure composite et un compartiment distinct séparé du précédent pour la réception de l'oxygène transféré électrochimiquement vers le côté anodique de la structure composite.

9. Application de la pompe à oxygène selon la revendication 8 à l'obtention d'oxygène, notamment à partir de l'air.

10. Application de la pompe à oxygène selon la revendication 8 à l'élimination de traces d'oxygène hors d'un gaz devant en être débarrassé de façon complète.

## Claims

1. Composite structure comprising a solid electrolyte conductor of $O^{2-}$ anions essentially impermeable to gases, said electrolyte being in contact with two electrodes, respectively a cathode and an anode both porous to gases, at least one of either the cathode or the anode being a voluminal electrode based on (i) at least one compound of the BIMEVOX type and (ii) an electronic conductor forming a distinct solid phase dispersed in the said compound of the BIMEVOX type, such as to be able to define amongst respective volumes of this voluminal electrode, a plurality of triple points of contact between an ambient gaseous atmosphere, the electrolyte and the electronic conductor.

2. Composite structure according to Claim 1, characterized in that the solid electrolyte is based on at least one compound of the BIMEVOX type.

3. Composite structure according to Claim 1 or 2, characterized in that the compounds of the type BIMEVOX contained in the solid electrolyte and the voluminal electrode respectively are identical.

4. Composite structure according to one of Claims 1 to 3, characterized in that the electronic conductor dispersed in the voluminal electrode is a metal or a metal oxide.

5. Composite structure according to one of Claims 1 to 4, characterized in that the electronic conductor dispersed in the voluminal electrode is an oxide of ruthenium $RuO_2$ or of gold.

6. Electrochemical cell applicable notably for separating or extracting from a gas on the cathode side of a composite structure according to one of Claims 1 to 5, all or some of the oxygen which the gas may contain and for recuperating this oxygen on the anode side of said composite structure, said structure interposed in a supply circuit of electric current allowing the creation of a sufficient difference in potential between the opposite sides of said composite structure to allow the oxygen admitted on the cathode side to be reduced to $O^{2-}$ ions and the $O^{2-}$ ions transferred via the composite structure to be oxidised to gaseous oxygen molecules on the anode side of the composite structure.

7. Electrochemical cell according to Claim 6, characterized in that the composite structure is linked to the supply circuit by the intermediary of current collectors in contact with at least one of either the cathode or anode of said composite structure.

8. Oxygen pump operating at least one electrochemical cell according to Claim 6 or 7, this pump comprising a gas supply chamber containing the oxygen for conveyance to contact the cathode side of the composite structure and a separate chamber separated from the preceding chamber for receiving the oxygen transferred electrochemically towards the anode side of the composite structure.

9. Application of the oxygen pump according to Claim 8 for obtaining oxygen, notably from the air.

10. Application of the oxygen pump according to Claim 8 for eliminating traces of oxygen from a gas from which oxygen is being completely removed.

**Patentansprüche**

1. Verbundstruktur aus einem im wesentlichen gasundurchlässigen $O^{2-}$-Anionen leitenden, festen Elektrolyten, der sich mit zwei gasdurchlässigen Elektroden, nämlich einer Kathode und einer Anode, in Kontakt befindet, von denen mindestens eine eine Massenelektrode auf der Basis von (i) wenigstens einer Zusammensetzung des BIMEVOX-Typs und (ii) einem Elektronenleiter ist, der eine davon verschiedene in der Zusammensetzung des BIMEVOX-Typs dispergierte Feststoffphase bildet, so daß sich im Inneren der jeweiligen Massen dieser Massenelektrode eine Vielzahl von Dreifachkontaktpunkten zwischen einer umgebenden gasförmigen Atmosphäre, dem Elektrolyten und dem elektronischen Leiter bildet.

2. Verbundstruktur nach Anspruch 1, dadurch gekennzeichnet, daß der feste Elektrolyt als Grundmaterial mindestens eine Zusammensetzung des BIMEVOX-Typs hat.

3. Verbundstruktur nach Anspruch 1 oder 2, dadurch gekennzeichnet, daß die jeweils in dem festen Elektrolyten und der Massenelektrode enthaltenen Zusammensetzungen des BIMEVOX-Typs identisch sind.

4. Verbundstruktur nach einem der Ansprüche 1 bis 3, dadurch gekennzeichnet, daß der in der Massenelektrode verteilte Elektronenleiter ein Metall oder ein Metalloxid ist.

5. Verbundstruktur nach einem der Ansprüche 1 bis 4, dadurch gekennzeichnet, daß der in der Volumenelektrode verteilte Elektronenleiter ein Rutheniumoxid $RuO_2$ oder ein Goldoxid ist.

6. Elektrochemische Zelle, insbesondere zum Separieren oder Extrahieren eines Teils des oder allen Sauerstoffs, der in einem Gas an der Kathodenseite einer Verbundstruktur nach einem der Ansprüche 1 bis 5 enthalten sein kann, und zur Rückgewinnung dieses Sauerstoffs an der Anodenseite dieser Verbundstruktur, die ihrerseits in einen elektrischen Stromkreis eingefügt ist, der zwischen den gegenüberliegenden Seiten dieser Verbundstruktur die Erzeugung einer Potentialdifferenz ermöglicht, die zur Reduktion des kathodenseitig zugeführten Sauerstoffs zu $O^{2-}$-Ionen und zur Oxydation der durch die Verbundstruktur hindurch beförderten $O^{2-}$-Ionen zu gasförmigen Sauerstoffmolekülen auf der Anodenseite ausreicht.

7. Elektrochemische Zelle nach Anspruch 6, dadurch gekennzeichnet, daß die Verbundstruktur mit dem Stromkreis über Stromkollektoren verbunden ist, die zumindest entweder die Kathode oder die Anode der Verbundstruktur kontaktieren.

8. Sauerstoffpumpe unter Verwendung zumindest einer elektrochemische Zelle nach einem der Ansprüche 6 oder 7, wobei die Pumpe eine Gasversorgungskammer umfaßt, die Sauerstoff enthält, um diesen mit der Kathodenseite der Verbundstruktur in Kontakt zu bringen sowie eine von der vorhergehenden verschiedene, getrennte Kammer zur Aufnahme des elektrochemisch zur Anodenseite der Verbundstruktur beförderten Sauerstoffs.

9. Verwendung der Sauerstoffpumpe nach Anspruch 8, zur Erzeugung von Sauerstoff, insbesondere aus Luft.

10. Verwendung der Sauerstoffpumpe nach Anspruch 8, zur Entfernung von Sauerstoffspuren aus einem Gas, das vollständig frei von Sauerstoff sein muß.

$$O_2 + 4e^- \longrightarrow 2\,O^{2-}$$

E

$$2\,O^{2-} \longrightarrow O_2 + 4e^-$$

C

A

$O_2$

$O_2$

**FIG.1**

$O_2 + 4e^- \longrightarrow 2O^{2-}$

−

e ⟷ e — 1

e $O^{2-}$ $O_2$ — 2

$O^{2-}$ — 3

e $O^{2-}$ $O_2$ — 4

e ⟷ e — 5

$2O^{2-} \longrightarrow O_2 + 4e^-$

+

**FIG.2**

O2/N2

26
25
21
23

**FIG.3**

22

27 28 29

Ar

24

%O2

FIG. 4

E (Au)
E (RuO2-BiCo)
RF (Au)
RF (RuO2-BiC—)
O2 (Au)
O2 (RuO2-BiC—)

EP 0 759 803 B1

FIG.5

EP 0 759 803 B1